# FASCICULE DE BREVET EUROPEEN

(11) **EP 0 384 788 B1**
(45) Date de publication et mention de la délivrance du brevet: **22.09.1993**
(21) Numéro de dépôt: 90400018.9
(22) Date de dépôt: 04.01.1990
(51) Int. Cl.: H02H 3/00, H02H 7/08

(54) **Appareil composable de protection et de commande pour moteur**
Zusammensetzbare Schutz- und Steuervorrichtung für Motoren
Composable protection and control device for a motor

(30) Priorité: 21.02.1989 FR 8902216
(43) Date de publication de la demande: 29.08.1990
(73) Titulaire: TELEMECANIQUE, 92504 Rueil Malmaison Cedex (FR)
(72) Inventeur: Llerena, Laurent, F-78380 Bougival (FR); Loiseley, Michel, F-91120 Palaiseau (FR)
(74) Mandataire: de Saint-Palais, Arnaud Marie

(56) Documents cités:
- EP-A- 0 211 507
- EP-A- 0 214 025
- DE-A- 3 541 273

## Description

La présente invention concerne un appareil composable de protection et de commande pour moteur, comportant un ensemble de puissance et un module de contrôle interchangeable associé audit ensemble.

Les appareils de protection et de commande pour moteurs tels que les démarreurs ou démarreurs-ralentisseurs, associés ou non à des dispositifs de protection thermique, comprennent généralement dans une enveloppe :
- des interrupteurs statiques de puissance qui commandent l'établissement et l'interruption des courants de phase du moteur,
- des capteurs de courant associés à au moins l'une des phases à commander,
- un circuit de contrôle assurant l'allumage - et, le cas échéant, l'extinction - des interrupteurs de puissance en fonction d'un ordre de marche ou d'arrêt, provenant par exemple d'une commande normale ou d'une commande d'ouverture consécutive à un défaut électrique constaté notamment à partir des informations d'intensité délivrées par les capteurs de courant.

Des appareils de ce genre tels que, par exemple, celui qui se trouve décrit dans le brevet européen 0 214 025, sont calibrés pour être associés à des moteurs de puissance déterminée. Pour proposer une gamme d'appareils associables à un large éventail de moteurs, le fabricant de ces appareils doit scinder sa gamme en plusieurs calibres, ce qui nécessite le montage et l'assemblage d'autant d'appareils distincts.

L'invention a pour but de simplifier la fabrication, le stockage et la maintenance d'appareils de protection et de commande pour moteurs du type précédemment décrit par le recours à un module de contrôle commun aux appareils de divers calibres d'une gamme et par un agencement approprié du module de contrôle et des divers ensembles de puissance auxquels il est accouplable.

Pour parvenir à ce résultat, l'invention propose un appareil de protection et de commande de type démarreur ou démarreur ralentisseur d'un moteur polyphasé, cet appareil comprenant un ensemble de puissance comportant des interrupteurs de puissance semi-conducteurs commandant l'établissement et l'interruption des courants de phase, ainsi que des capteurs de courant associés à tout ou partie des phases à commander et à protéger, et muni d'une logique qui gère la commande des interrupteurs de puissance.

Selon l'invention, cet appareil est caractérisé en ce qu'il est composé de deux modules comportant chacun une enveloppe pouvant se fixer l'un sur l'autre ou l'un dans l'autre, de manière amovible, l'un de ces modules logeant ledit ensemble de puissance, lesdits capteurs de courant, ainsi qu'un organe de calibrage prévu pour identifier le calibre dudit ensemble de puissance, l'autre module standard et commun aux appareils de divers calibres d'une gamme, étant relié aux susdits capteurs de courant et aux susdits interrupteurs de puissance, et logeant ladite logique, laquelle est susceptible d'être reliée, via un convertisseur analogique-numérique, à l'organe de calibrage et est agencée pour en lire la valeur et, en fonction de la valeur lue, pour sélectionner les caractéristiques d'exploitation du moteur correspondant au calibre de l'ensemble de puissance.

La fabrication, le stockage et la maintenance des différents appareils d'une même gamme sont donc simplifiés puisqu'un même module de contrôle est accouplable aux différents ensembles de puissance de la gamme.

Le module de contrôle comporte avantageusement pour logique un microprocesseur qui présente une mémoire morte comprenant une table des caractéristiques d'exploitation de l'appareil.

L'organe de calibrage comprend, de préférence, une résistance de calibrage à fonction d'identification. Il peut comporter, en outre, une résistance sur la liaison entre les capteurs de courant et le convertisseur analogique-numérique, ainsi qu'une résistance associée à un organe de sauvegarde d'image thermique.

D'autres caractéristiques, ainsi que les avantages de l'invention, apparaîtront clairement à la lecture de la description ci-après.

Aux dessins annexés :
La figure 1 illustre schématiquement un appareil composable de commande et de protection pour moteur selon l'invention ;
La figure 2 montre schématiquement, et de manière plus détaillée, l'appareil de la figure 1.

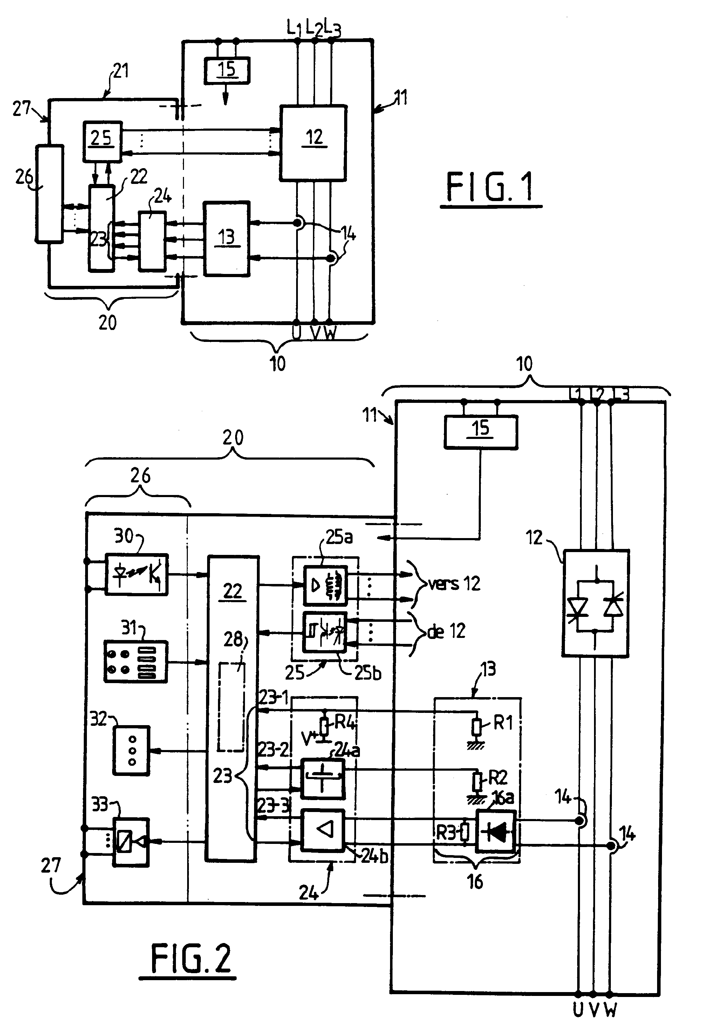

L'appareil représenté sur la figure 1 est un démarreur ou démarreur-ralentisseur progressif pour moteur asynchrone triphasé.

L'appareil comprend un ensemble de puissance 10 et un module de contrôle 20. L'ensemble de puissance présente une enveloppe 11 sur ou dans laquelle est fixée, de manière amovible, une enveloppe 21 du module de contrôle. Celui-ci est un dispositif standard commun aux appareils de divers calibres - par exemple pour des moteurs de quelques kilowatts à quelques dizaines de kilowatts - d'une même gamme.

L'enveloppe 11 loge un ensemble d'interrupteurs statiques 12 raccordés, d'une part, à des bornes de réseau L1, L2, L3 et, d'autre part, à des bornes de charge U, V, W pour établir et interrompre les chemins de courant correspondants L1U, L2V, L3W en fonction des signaux générés par un microprocesseur 22 situé dans le module de contrôle.

L'enveloppe 11 loge également un organe analogique de calibrage 13 raccordé à des entrées 23 de conversion analogique-numérique du microprocesseur par l'intermédiaire d'un interface de traitement et/ou d'adaptation 24. La liaison entre l'organe de calibrage 13 et le microprocesseur peut, bien sûr, s'effectuer via un convertisseur analogique-numérique distinct du microprocesseur.

L'organe de calibrage 13 est relié à des capteurs de courant usuels 14 délivrant des signaux représentatifs de l'intensité dans au moins un conducteur de phase, présentement dans deux conducteurs de phase. L'enveloppe 11 loge, de plus, une alimentation 15 prévue pour alimenter les organes du module de contrôle.

Le module de contrôle 20 comprend, outre le microprocesseur 22 et l'interface 24, un circuit 25 de commande pour les interrupteurs statiques de l'ensemble 12. Dans le présent mode de réalisation, les interrupteurs sont des thyristors dont le circuit de commande 25 est géré par le microprocesseur 22 pour permettre en particulier un démarrage et un ralentissement progressifs du moteur, notamment en fonction de rampes d'accélération et de décélération souhaitées.

Le module de contrôle 20 comporte un ensemble de dialogue 26 muni d'éléments d'entrée, de sortie et de signalisation de préférence visibles et/ou accessibles sur une face avant 27 de l'enveloppe 21. Le microprocesseur 22 est relié par des conducteurs et des moyens de connexion appropriés à l'organe de calibrage 13 via l'interface 24, ainsi qu'au circuit de commande 25 et à l'ensemble de dialogue 26, et il est agencé de manière à lire la valeur d'au moins un élément de calibrage contenu dans l'organe 13 et, en fonction de la valeur lue, choisir dans une table 28 (figure 2), par exemple dans une mémoire morte, des caractéristiques d'exploitation de l'appareil correspondant au calibre de l'ensemble de puissance 10.

La figure 2 explicite plus particulièrement l'organe de calibrage 13. Cet organe comprend trois éléments de calibrage constitués très simplement par des résistances respectives R1, R2 et R3.

La résistance de calibrage R1 est montée en pont avec une résistance fixe R4 reliée à un potentiel V⁺ et située dans l'interface 24 de manière à délivrer à une entrée de conversion analogique-numérique 23-1 du microprocesseur un signal analogique d'identification du calibre de l'ensemble de puissance 10.

La résistance de calibrage R2 est reliée à un organe de mémorisation 24a de l'état thermique du moteur, par exemple du type décrit dans le brevet FR - 2 586 489, de manière à mémoriser cet état thermique et à le restituer à une entrée A/N 23-2 du microprocesseur sur requête de celui-ci, par exemple lors d'un rétablissement d'alimentation survenant après une coupure d'alimentation des phases du moteur. La résistance R2 permet ainsi de fixer une constante de temps simulant, de manière suffisamment approchée, celle de refroidissement d'un moteur de calibre corrélatif.

La résistance de calibrage R3 est située dans un circuit d'adaptation 16 comprenant un redresseur 16a auquel sont raccordés les capteurs de courant 14 pour transmettre à un circuit de filtrage et d'amplification 24b prévu dans l'interface 24, une valeur compatible avec une entrée A/N respective 23-3 du microprocesseur, quel que soit le calibre de l'ensemble de puissance 10.

De plus, le circuit de commande 25 se compose de circuits allumeurs 25a et de circuits de synchronisation 25b associés aux thyristors de l'ensemble 12.

L'ensemble de dialogue 26 comprend, plus précisément, un organe de commande isolée 30, une plaquette amovible de réglage 31, des diodes électroluminescentes de signalisation 32 et des organes de sortie à relais 33, ces divers éléments étant reliés au microprocesseur 22.

## Revendications

1. Appareil de protection et de commande de type démarreur ou démarreur ralentisseur d'un moteur polyphasé, cet appareil comprenant un ensemble de puissance (10) comportant des interrupteurs de puissance semi-conducteurs (12) commandant l'établissement et l'interruption des courants de phase, ainsi que des capteurs de courant (14) associés à tout ou partie des phases à commander et à protéger, et muni d'une logique (22) qui gère la commande des interrupteurs de puissance (12),
caractérisé en ce qu'il est composé de deux modules comportant chacun une enveloppe (11, 21) pouvant se fixer l'un sur l'autre ou l'un dans l'autre, de manière amovible, l'un de ces modules logeant ledit ensemble de puissance (10), lesdits capteurs de courant (14), ainsi qu'un organe de calibrage (13) prévu pour identifier le calibre dudit ensemble de puissance (10), l'autre module (20) standard et commun aux appareils de divers calibres d'une gamme, étant relié aux susdits capteurs de courant (14) et aux susdits interrupteurs de puissance (12), et logeant ladite logique (22), laquelle est susceptible d'être reliée, via un convertisseur analogique-numérique, à l'organe de calibrage (13) et est agencée pour en lire la valeur et, en fonction de la valeur lue, pour sélectionner les caractéristiques d'exploitation du moteur correspondant au calibre de l'ensemble de puissance (10).

2. Appareil selon la revendication 1,
caractérisé en ce que la logique (22) du module de contrôle (20) est un microprocesseur qui présente une mémoire morte comprenant une table (28) des caractéristiques d'exploitation de l'appareil.

3. Appareil selon la revendication 1,
caractérisé en ce que l'organe de calibrage comprend une résistance (R1).

4. Appareil selon la revendication 1,
caractérisé en ce que les capteurs de courant (14) propres à l'ensemble de puissance (10) sont reliés au convertisseur analogique-numérique du module de contrôle (20) par un circuit d'adaptation (16) propre à l'ensemble de puissance et muni d'un élément de calibrage tel qu'une résistance (R3).

5. Appareil selon la revendication 1,
caractérisé en ce qu'un élément de calibrage tel qu'une résistance (R2) propre à l'ensemble de puissance (10) est relié à un organe de sauvegarde d'image thermique (24a) situé dans le module de contrôle (20) et géré par la logique (22).

## Patentansprüche

1. Gerät zum Schutz und zur Steuerung von der Art Starter oder Starter-Retarder eines Mehrphasenmotors, wobei dieses Gerät eine Leistungseinheit (10) aufweist, die Halbleiter-Leistungsschalter (12), die den Aufbau und die Unterbrechung der Phasenströme steuern, sowie Strommeßfühler (14) enthält, die allen oder einem Teil der zu steuernden und zu schützenden Phasen zugeordnet sind, und mit einer Logik (22) versehen ist, die die Leistungsschalter (12) steuert,
dadurch gekennzeichnet, daß es aus zwei Moduln besteht, die je eine Hülle (11, 21) aufweisen und lösbar aufeinander oder ineinander befestigt werden können, wobei einer dieser Moduln die Leistungseinheit (10), die Strommeßfühler (14) sowie ein Kalibrierorgan (13) enthält, das dazu vorgesehen ist, das Kaliber der Leistungseinheit (10) zu identifizieren, während der andere Modul (20), der genormt und den Geräten verschiedener Kaliber eines Bereichs gemeinsam ist, mit den Strommeßfühlern (14) und den Leistungsschaltern (12) verbunden ist und die Logik (22) enthält, die über einen Analog-Digital-Wandler mit dem Kalibrierorgan (13) verbunden werden kann und aufgebaut ist, um dessen Wert abzulesen und um in Abhängigkeit vom abgelesenen Wert die Betriebsmerkmale des Motors entsprechend dem Kaliber der Leistungseinheit (10) auszuwählen.

2. Gerät nach Anspruch 1, dadurch gekennzeichnet, daß die Logik (22) des Steuermoduls (20) ein Mikroprozessor ist, der einen Festspeicher aufweist, welcher eine Tafel (28) der Betriebsmerkmale des Geräts enthält.

3. Gerät nach Anspruch 1, dadurch gekennzeichnet, daß das Kalibrierorgan einen Widerstand (R1) enthält.

4. Gerät nach Anspruch 1, dadurch gekennzeichnet, daß die zur Leistungseinheit (10) gehörenden Strommeßfühler (14) mit dem Analog-Digital-Wandler des Steuermoduls (20) über eine Anpassungsschaltung (16) verbunden sind, die zur Leistungseinheit gehört und mit einem Kalibrierelement wie einem Widerstand (R3) ausgestattet ist.

5. Gerät nach Anspruch 1, dadurch gekennzeichnet, daß ein Kalibrierelement wie ein Widerstand (R2), der zur Leistungseinheit (10) gehört, mit einem Organ zur Sicherung des Wärmebilds (24a) verbunden ist, das im Steuermodul (20) angeordnet ist und von der Logik (22) gesteuert wird.

## Claims

1. Composable protection and control apparatus of the starting or starting-slowing down type for a multiphase motor, said apparatus having a power assembly (10) comprising semiconductor power switches (12) controlling the switching on and off of the phase currents, as well as current sensors (14) associated with all or part of the phases to be controlled and protected, and a logic (22) which manages the control of the power switches (12),
characterized in that it is formed of two modules, each having a case (11, 21) which may be removably fixed one on the other or one in the other, one of said modules housing said power assembly (10), said current sensors (14), as well as a sizing means (13) for identifying the size of said power assembly (10), the other module (20), which is a standard module common to the apparatus of different sizes of a range, being connected to said current sensors (14) and said power switches (12) and housing said logic (22) which may be connected by means of an A-D converter to the sizing means (13) and is adapted for reading the value thereof and, as a function of the value read, for selecting the working characteristics of the motor corresponding to the size of the power assembly (10).

2. The apparatus as claimed in claim 1,
characterized in that said logic (22) of the control module (20) is a microprocessor which has an ROM comprising a table (28) of the working characteristics of the apparatus.

3. The apparatus as claimed in claim 1,
characterized in that said sizing means comprises a resistor (R1).

4. The apparatus as claimed in claim 1,
characterized in that said current sensors (14) belonging to the power assembly (10) are connected to the A-D converter of the control module (20) by a matching circuit (16) belonging to the power assembly and having a sizing element such as a resistor (R3).

5. The apparatus as claimed in claim 1,
characterized in that a sizing element such as a resistor (R2) belonging to the power assembly (10) is connected to a thermal image safeguard means (24a) situated in the control module (20) and managed by said logic (22).
